# EUROPEAN PATENT APPLICATION

(11) **EP 2 573 671 A2**
(43) Date of publication of application: **27.03.2013**
(21) Application number: 12185949.0
(22) Date of filing: 25.09.2012
(51) Int. Cl.: G06F 3/14, G09G 5/02, G09G 5/00

(54) **Colour calibration method and apparatus**

(30) Priority: 26.09.2011 KR 20110096740; 02.08.2012 KR 20120084849
(71) Applicant: Samsung Electronics Co., Ltd, Gyeonggi-do 443-742 (KR)
(72) Inventor: Park, Ji-yong, Gyeonggi-do (KR); Kim, Dong-wook, Gyeonggi-do (KR); Beon, Nam-kyun, Seoul (KR); Im, Sang-kyun, Seoul (KR)
(74) Representative: Walaski, Jan Filip

(57) **Abstract**

An image processing apparatus, colour calibration method, and a colour calibration system are provided. The colour calibration system includes an image processing apparatus and a display apparatus, wherein the image processing apparatus comprises a graphic card unit which outputs a graphic image and first colour patch information for colour calibration of the display apparatus; a colour calibration unit which receives the output graphic image and first colour patch information from the graphic card unit, generates second colour patch information based on the first colour patch information and stored internal colour patch information to display a colour patch in an additional layer separately from the graphic image, and transmits the graphic image and the second colour patch information to the display apparatus; and a first control unit which controls the colour calibration unit to perform colour calibration process according to a colour calibration feedback signal transmitted by the display apparatus; the display apparatus comprises a display unit; a detection unit which detects a colour of a colour patch displayed on the display unit; and a second control unit which controls the display unit to display thereon the colour patch generated on the basis of the second colour patch information and the received graphic image and transmits a colour calibration feedback signal to the image processing apparatus according to a detection result of the detection unit.

## Description

Apparatuses and methods consistent with the exemplary embodiments relate to a colour calibration system and method including an image processing apparatus and a display apparatus.

A display apparatus processes an image signal provided from an input source such as a personal computer (PC) or the like into a displayable form to be viewed to users, and may be implemented with a television (TV), a monitor, a portable media player or the like.

In order to meet a user's demand to watch a finer image with high quality, it is advantageous for a display apparatus to display an input image as an image having a colour desired by a user. This is the more so especially for a professional display apparatus, a broadcasting display apparatus, a large format display (LFD) and a medical display apparatus.

Accordingly, the display apparatus may perform colour calibration. Colour calibration denotes a process of adjusting an output characteristic of the display apparatus to a defined standard or based on a setting of a user.

In the related art colour calibration of the display apparatus, there occur many cases where colour is calibrated to a colour which is unfit for a level desired by a user.

One or more exemplary embodiments provide a display apparatus which is capable of performing correct colour calibration fit for a user's intention, and a colour calibration method thereof.

According to an aspect of an exemplary embodiment, there is provided an image processing apparatus comprising: an interface unit which communicates with an external display apparatus; a graphic card unit which outputs a graphic image which will be displayed in the display apparatus and first colour patch information for colour calibration of the display apparatus; a colour calibration unit which receives the output graphic image and first colour patch information, generates second colour patch information based on the first colour patch information and stored internal colour patch information, and transmits the graphic image and the second colour patch information to the display apparatus through the interface unit; and a control unit which controls the colour calibration unit to perform colour calibration by adjusting a colour patch displayed in the display apparatus.

The first colour patch information and the internal colour patch information may include colour level information of a particular colour input by a user.

The control unit may generate and transmit a predetermined warning screen to the display apparatus if the first colour patch information is not equal to the internal colour patch information.

The control unit may control the colour calibration unit to generate second colour patch information having a same colour level as the first colour patch information if the first colour patch information is not equal to the internal colour patch information.

The display apparatus may generate and display the colour patch in an additional layer separately from the graphic image based on the second colour patch information, and the colour calibration unit may perform colour calibration by adjusting the colour of the colour patch only.

The colour patch may be displayed in a particular area of a screen of the display apparatus.

The control unit may generate the second colour patch information based on an interface type of the interface unit and an interface of the display apparatus.

According to an aspect of another exemplary embodiment, there is provided a colour calibration method comprising: generating a graphic image which will be displayed in a display apparatus and first colour patch information for colour calibration of the display apparatus; generating second colour patch information to display a colour patch based on the first colour patch information and stored internal colour patch information; and displaying a colour patch in the display apparatus based on the second colour patch information and performing colour calibration by adjusting the displayed colour patch.

The first colour patch information and the internal colour patch information may include colour level information of a particular colour input by a user.

The method may further include checking whether the first colour patch information is equal to the internal colour patch information.

The method may further include generating and displaying a predetermined warning screen in the display apparatus if the first colour patch information is not equal to the internal colour patch information.

The method may further include generating second colour patch information that has a same colour level as the first colour patch information does if the first colour patch information is not equal to the internal colour patch information.

The internal colour patch information may include a maximum level or a minimum level of the particular colour.

The method may further include generating the second colour patch information based on the interface type of the image processing apparatus and the display apparatus.

According to an aspect of another exemplary embodiment, there is provided a colour calibration system comprising: an image processing apparatus and a display apparatus, wherein the image processing apparatus comprises a graphic card unit which outputs a graphic image and first colour patch information for colour calibration of the display apparatus; a colour calibration unit which receives the output graphic image and first colour patch information, generates second colour patch information based on the first colour patch information and stored internal colour patch information to display a colour patch in an additional layer separately from the graphic image, and transmits the graphic image and the second colour patch information to the display apparatus; and a first control unit which controls the colour calibration unit to perform colour calibration according to a colour calibration feedback signal transmitted by the display apparatus; the display apparatus comprises a display unit; a detection unit which detects a colour of a colour patch displayed on the display unit; and a second control unit which controls the display unit to display thereon the colour patch generated on the basis of the second colour patch information and the received graphic image and transmits a colour calibration feedback signal to the image processing apparatus according to a detection result of the detection unit.

The first colour patch information and the internal colour patch information may include colour level information of a particular colour input by a user.

The first control unit may check whether the first colour patch information is equal to the internal colour patch information, and if the first colour patch information is not equal to the internal colour patch information, the first control unit may generate and transmit a predetermined warning screen to the display apparatus or generate second colour patch information having a same colour level as the first colour patch information does.

The first control unit may generate the second colour patch information based on the interface type of the image processing apparatus and the display apparatus.

The above and/or other aspects will become apparent and more readily appreciated from the following description of the exemplary embodiments, taken in conjunction with the accompanying drawings, in which:
FIG. 1 is a control block diagram showing a display apparatus according to a first exemplary embodiment;
FIG. 2 is a view showing an example in which a result of a comparison of patch levels and a warning alarm are displayed;
FIG. 3 is a view showing an example in which a patch level of an inner patch is changed according to a graphic card patch;
FIG. 4 is a view showing an example of a change of a patch level depending on a method of connecting a display apparatus to an external input source;
FIG. 5 is a control flow chart of a colour calibration method according to the first exemplary embodiment;
FIG. 6 is a control block diagram of a colour calibration system according to a second exemplary embodiment;
FIGS. 7 and 8 are a view showing an example a screen in which a colour calibration is performed; and
FIG. 9 is a control flowchart showing a colour calibration method according to the second exemplary embodiment.

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout. In the following exemplary embodiments, explanation of components having no direct relation to the spirit of the present inventive concept is omitted. However, it will be appreciated that such omission in description is not meant to exclude such omitted components from a display system to which the spirit of the inventive concept is applied.

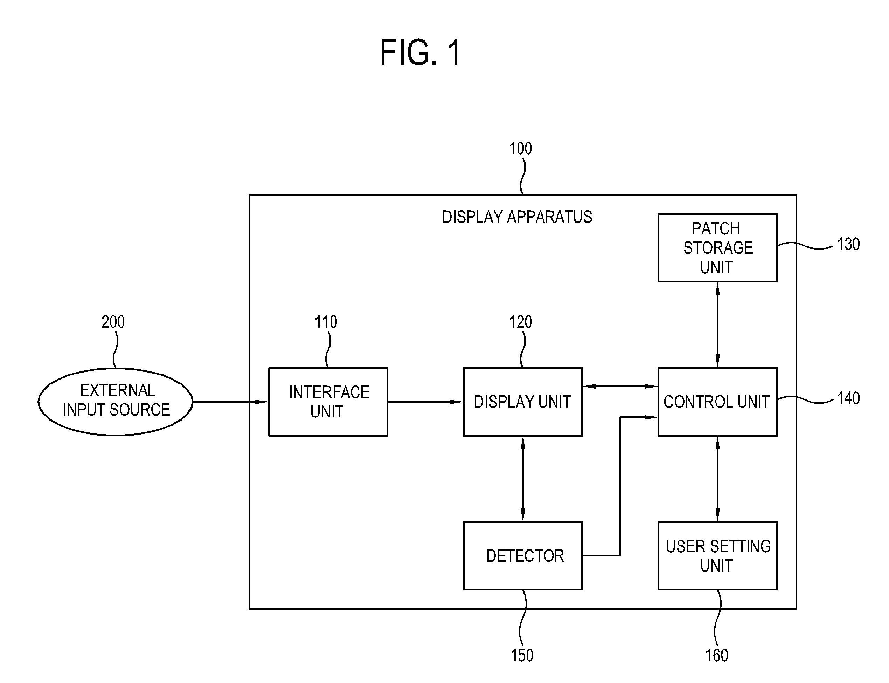

Hereinafter, a first exemplary embodiment will be described with reference to FIGS. 1 to 5.

FIG. 1 is a control block diagram showing a display apparatus according to an exemplary embodiment.

As shown in FIG. 1, a display apparatus 100 includes an interface unit 110, a display unit 120, a patch storage unit 130 and a control unit 140. The display apparatus 100 is an apparatus capable of displaying an image signal supplied from an external input source 200 and may be implemented with, but is not limited to, a monitor, a television (TV) or the like.

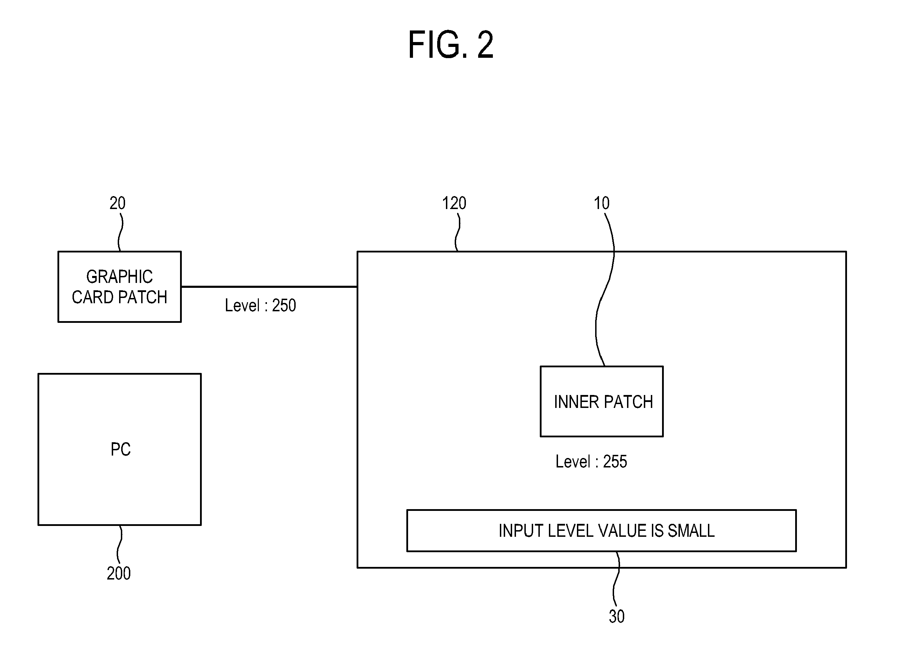

The interface unit 110 exchanges data with the external input source 200. The external input source 200 includes a graphic card which converts generated data into an image signal which is then transmitted to the display apparatus 100, and may store a graphic card patch 20 (see FIG. 2) for colour calibration. The external input source 200 may be implemented with, but is not limited to, a personal computer (PC). The interface unit 110 may exchange data with the external input source 200 through such a scheme as digital visual interface (DVI), Component video, high-definition multimedia interface (HDMI), serial digital interface (SDI) or the like.

The display unit 120 displays an image and a colour calibration process. The display unit 120 may include a display panel on which an image is displayed, and a panel driver capable of processing an input image signal so that the image can be displayed on the display panel, detailed implementation of which is not particularly limited. The image signal received from the external source 200 via the interface unit 110 is displayed on the display unit 120 through image processing such as decoding, de-interlacing, scaling and so on. If the control unit 140, which will be described later, performs colour calibration at a user's command, a colour calibration process including a colour patch, a colour calibration state window and so on is displayed on the display unit 120.

The patch storage unit 130 stores an inner patch 10 (see FIG. 2). The inner patch 10 is displayed with a specified colour and the display apparatus 100 can detect a change in the inner patch 10 to perform the colour calibration.

The control unit 140 controls the entire operation of the display apparatus 100. Although not shown, the control unit 140 may include control programs, a nonvolatile memory such as a read only memory (ROM), a flash memory or the like in which the control programs are stored, a volatile memory such as a random access memory (RAM) into which at least some of the stored control programs are loaded, and a microprocessor such as a central processing unit (CPU), a micro control unit (MCU) or the like which executes the loaded control programs, etc.

The control unit 140 controls the colour calibration of the display apparatus 100 using the inner patch 10 stored in the patch storage unit 130 at a user's command. For the colour calibration, the display apparatus displays a colour reference for colour calibration (hereinafter referred to as "patch"), measures the displayed colour patch, and adjusts the colour patch to a targeted colour coordinate, colour temperature, brightness, gamma and so on. As a result of the colour calibration performed using the inner patch 10, since only a colour of a patch area in which colour calibration is performed in a screen displayed on the display unit 120 can be changed, a colour of the colour calibration state window displayed along with a colour patch can be prevented from being changed. In addition, even when a resolution of the display panel is different from a resolution of the graphic card, the colour calibration can be performed by correctly aligning size and position of the patch area displayed on the display unit 120.

When the colour calibration is performed, the control unit 140 checks a patch level of the graphic card of the external input source 200 through the interface unit 110. As used herein, the patch level denotes a digital level related to tristimulus values of a patch. In the following description, tristimulus values are represented by R, G and B brightness levels (R, G, B) with an example of 8 bits (256 colours). This is an example, and more or fewer bits may be used to represent the R, G, and B brightness levels.

As an example of the check of the patch level of the graphic card of the external input source 200, the control unit 140 can check the patch level of the graphic card by transmitting a control signal to output the graphic card patch level equal to the patch level of the inner patch 10 to the external input source 200 via the interface unit 110.

For example, if the patch level of the inner patch 10 is (255, 0, 0), that is, a R brightness level is 255, a B brightness level is 0, and a G brightness level is 0, the control unit 140 transmits a control command to output a graphic patch having the patch level (255, 0, 0) to the external input source 200 and, in response to this, can check the graphic card patch level transmitted from the external input source 200.

The control unit 140 compares the patch level of the graphic card patch 20 of the external input source 200 with the patch level of the inner patch 10 displayed on the display unit 120, and, if not equal, performs colour calibration by changing the patch level of the inner patch 10 into the graphic card patch level. If the graphic card patch level is (255, 0, 0) which is the same with the control command of the control unit 140, the colour calibration can be performed with no change of the inner patch 10. However, since a range of patch levels which are output from the graphic card may be varied, a value other than (255, 0, 0) of the control command may be output. As shown in FIG. 2, if the graphic card patch level (250, 0, 0) is different from the patch level of the inner patch 10, correct colour calibration cannot be achieved and thus the patch level of the inner patch 10 is changed to (250, 0, 0) for correct colour calibration.

In some exemplary embodiments, the display apparatus 100 may further include a detector 150 for detecting the patch level of the inner patch 10 displayed on the display unit 120. The detector 150 acts as a sensor for correctly sensing a displayed colour and transmits the sensed patch level of the inner patch 10 to the control unit 140.

In addition, as shown in FIG. 2, if the patch level of the graphic card patch 20 is not equal to the patch level of the inner patch 10, the control unit 140 can control a warning alarm 30 to be displayed on the display unit 120. As mentioned above, since correct colour calibration may not be achieved if the patch level of the graphic card patch 20 is not equal to the patch level of the inner patch 10, the warning alarm 30 can be displayed to allow a user to check setting of the graphic card or a state of a cable connecting between the external input source 200 and the interface unit 110. The warning alarm 30 may be displayed either during the colour calibration or after the colour calibration.

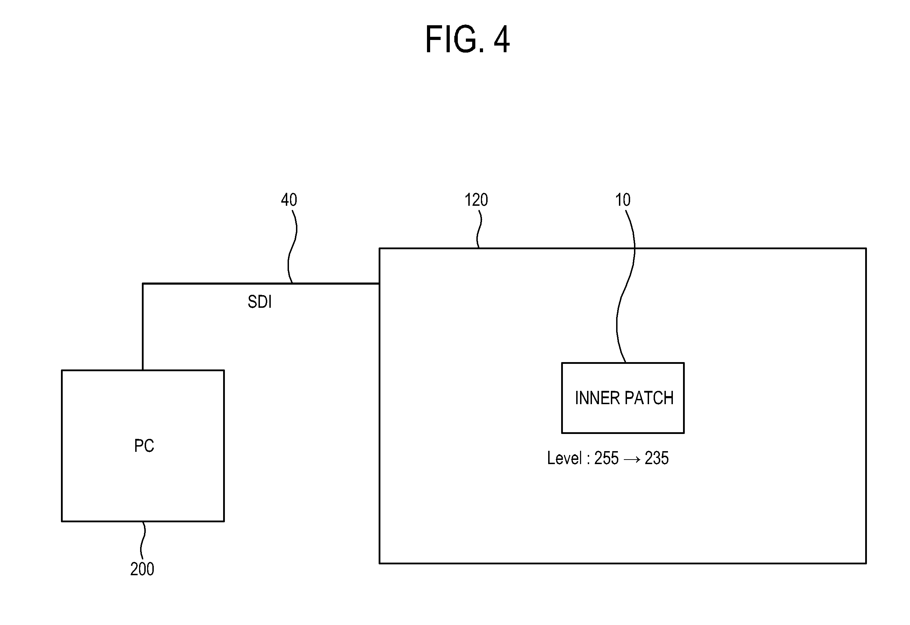

The interface unit 110 may be connected to the external input source 200 through such a scheme as digital visual interface (DVI), Component video, high-definition multimedia interface (HDMI), serial digital interface (SDI) or the like. Accordingly, a range of output levels to be transmitted may be varied depending on how the interface unit 110 is connected to the external input source 200. As shown in FIG. 4, if the interface unit 110 is connected to the external input source 200 through an SDI 40, a range of output levels to be transmitted can be limited to 16 to 235. In this case, even when the patch level of the inner patch 10 is (255, 0, 0), the graphic card patch level cannot be transmitted with (255, 0, 0) but can only be transmitted with (235, 16, 16) due to the SDI 40 connection. That is, the inner patch 10 is outside the maximal output level of the SDI 40. At this time, the control unit 140 can change the patch level of the inner patch 10 to (235, 16, 16) in response to information about the connection of the interface unit 110 to the external input source 200.

In some exemplary embodiments, the display apparatus 100 may further include a user setting unit 160 to allow a user to set the type of the external input source 200 and the information about the connection of the interface unit 110 to the external input source 200. Since a range of data to be transmitted may be limited depending on the type of the external input source 200 and how the interface unit 110 is connected to the external input source 200, the user may store relevant information in the user setting unit 160. Based on the user's settings through the user setting unit 160, the control unit 140 may change the patch level of the inner patch 10 in consideration of the limited range of data. As a result, the colour calibration can be achieved with a targeted value even when a patch level equal to that of the inner patch 10 cannot be input from the external input source 200.

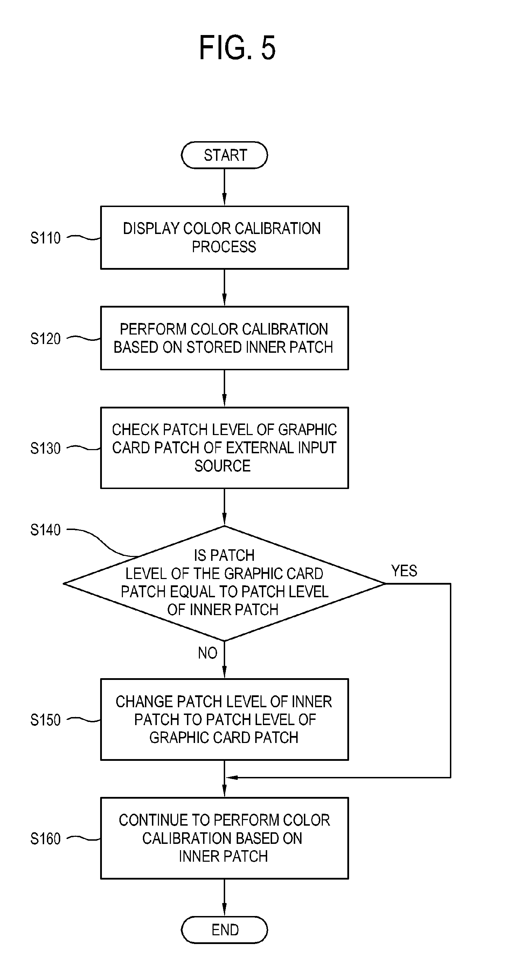

FIG. 5 is a flow chart of the colour calibration of a display apparatus according to an exemplary embodiment.

The display apparatus 100 displays a colour calibration process (S110). For the colour calibration process, the display apparatus displays a colour reference for colour calibration (hereinafter referred to as "patch"), measures the displayed colour patch, and adjusts the colour patch to a targeted colour coordinate, colour temperature, brightness, gamma and so on. During the colour calibration, a colour patch and a colour calibration state window can be displayed. The colour calibration state window allows for a user to change the colour calibration state of the patch, i.e., a patch value of the patch. The display apparatus 100 stores an inner patch and performs the colour calibration based on the stored inner patch (S120). The inner patch is displayed with a specified colour and the display apparatus 100 can detect a change in the inner patch to perform the colour calibration. The display apparatus 100 can detect the change, either using detector 150 or according to a setting by a user using the colour calibration state window, as described above. As a result of the colour calibration performed using the inner patch, since only a colour of a patch area in which colour calibration is performed in a screen displayed during the colour calibration process can be changed, a colour of the colour calibration state window displayed along with the colour patch can be prevented from being changed. In addition, even when a resolution of the display panel is different from a resolution of the graphic card, the colour calibration can be performed by correctly aligning size and position of the displayed patch area.

The display apparatus 100 checks a patch level of the graphic card patch of the external input source 200 (S130). As an example of the check of the patch level of the graphic card patch of the external input source 200, the display apparatus 100 can check the graphic card patch level by transmitting a control signal to the external input source 200 to output the graphic card patch level equal to the patch level of the inner patch 10 to the external input source 200.

The display apparatus 100 compares the checked graphic card patch level with the displayed patch level of the inner patch to determine if the patch level of the graphic card patch is equal to the patch level of the inner patch (S140). At this time, the display apparatus 100 may detect the patch level of the inner patch to be compared with the graphic card patch level.

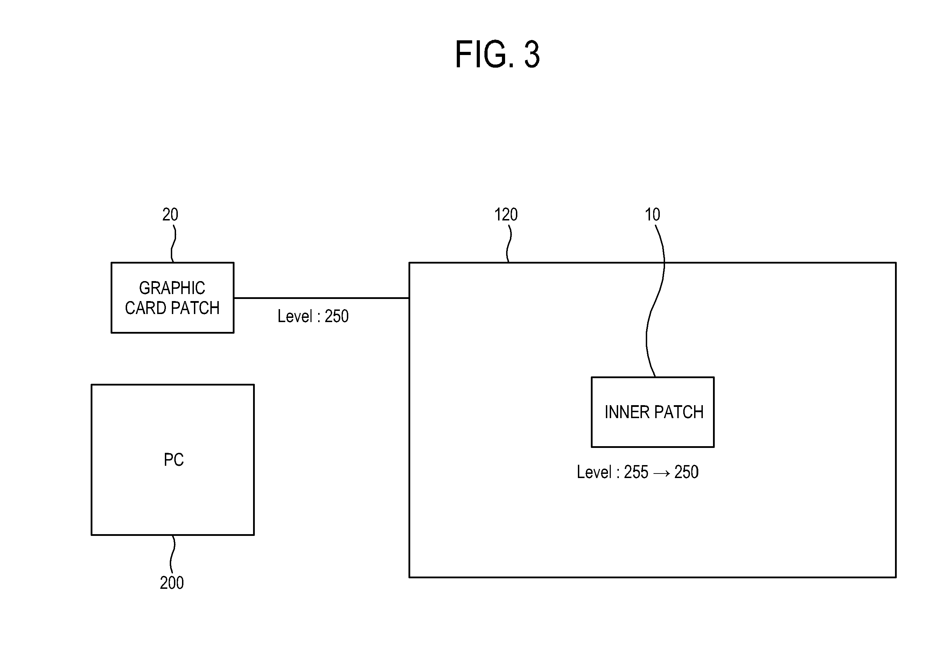

As a result of the determination, if the graphic card patch level is equal to the patch level of the inner patch (S140: YES), the colour calibration is continued to be performed on the inner patch (S160). However, if the graphic card patch level is not equal to the patch level of the inner patch (S140: NO), the display apparatus 100 changes the patch level of the inner patch to the patch level of the graphic card patch (S150). Changing the patch level has been described with reference to FIG. 3. Colour calibration is then continued based on the inner patch (S160).

If the graphic card patch level is not equal to the patch level of the inner patch, the display apparatus 100 can display a warning alarm. Since correct colour calibration might not be achieved if the graphic card patch level is not equal to the patch level of the inner patch, the warning alarm can be displayed to allow a user to check setting of the graphic card or a state of a cable connecting between the external input source 200 and the display apparatus 100. The warning alarm may be displayed either during the colour calibration or after the colour calibration.

The display apparatus 100 may be connected to the external input source 200 through such a scheme as digital visual interface (DVI), Component video, high-definition multimedia interface (HDMI), serial digital interface (SDI) or the like, and a range of output levels to be transmitted may be varied depending on how the display apparatus 100 is connected to the external input source 200. Accordingly, the display apparatus 100 can change the patch level of the inner patch in response to information about the connection of the display apparatus 100 to the external input source 200.

A user can set the type of the external input source 200 and the information about the connection of the display apparatus 100 to the external input source 200. Since a range of data to be transmitted may be limited depending on the type of the external input source 200 and how the display apparatus 100 is connected to the external input source 200, the user may store relevant information in the display apparatus 100. Based on the user's setting, the display apparatus 100 may change the patch level of the inner patch in consideration of the limited range of data. As a result, the colour calibration can be achieved with a targeted value even when a patch level equal to that of the inner patch 10 cannot be input from the external input source 200.

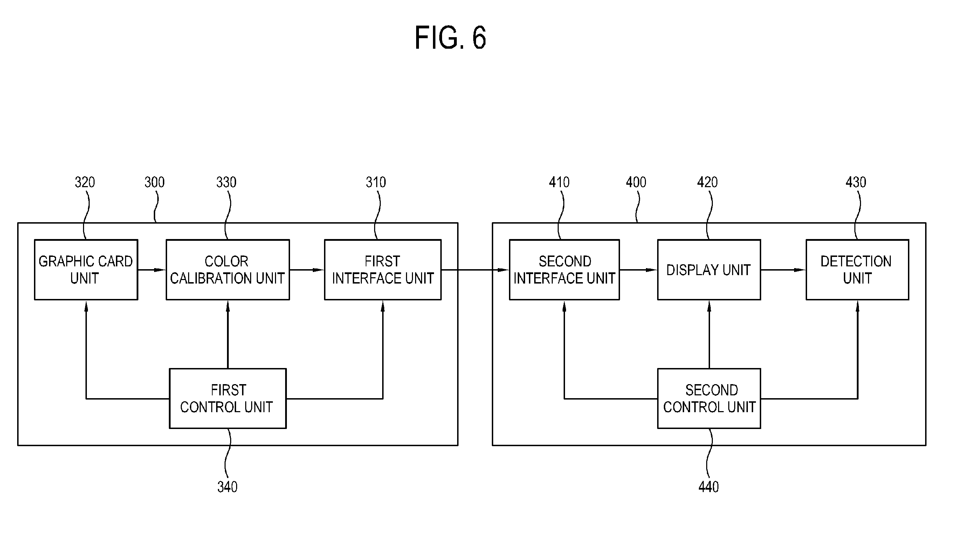

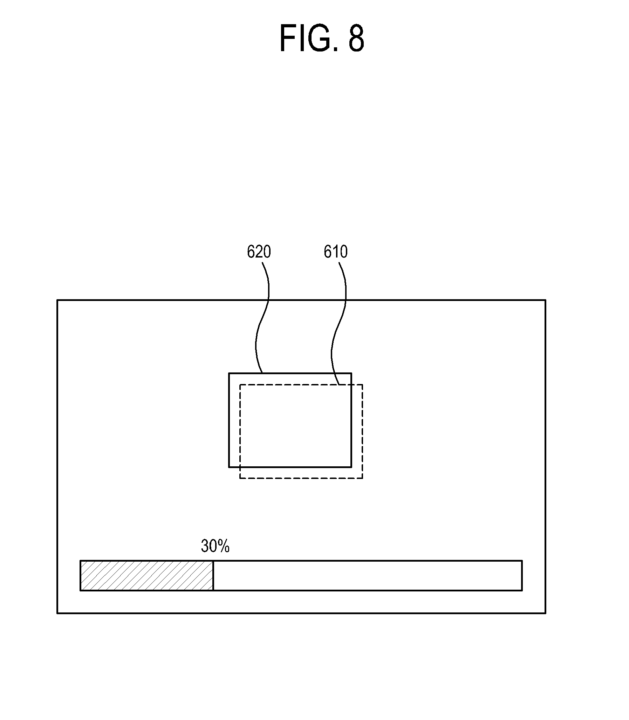

Hereinafter, a second exemplary embodiment will be described with reference to FIGS. 6 to 9.

FIG. 6 is a control block diagram of a colour calibration system according to a second exemplary embodiment.

As shown therein, the colour calibration system includes an image processing apparatus 300 which receives an image signal from outside or generates and transmits an image signal, and a display apparatus 400 which displays an image that is provided by the image processing apparatus 300.

As shown therein, the image processing apparatus 300 includes a first interface unit 310, a graphic card unit 320, a colour calibration unit 330, and a first control unit 340. The image processing apparatus 300 may be implemented with a personal computer (PC) to execute software for colour calibration.

The first interface unit 310 exchange data with the display apparatus 400 through a known interface standard such as DVI, Component, HDMI and SDI. The exchanged data may include an image signal and a colour calibration feedback signal as a result of detection by a detection unit 430 which will be described later.

The graphic card unit 320 may be implemented with a known graphic card which controls generation of a graphic of the image processing apparatus 300. If the colour calibration is performed, the graphic card unit 320 outputs first colour patch information, together with a graphic image, to the colour calibration unit 330, which will be described later, to perform colour calibration of the display apparatus 100. To perform the colour calibration, a particular colour patch should be displayed in a screen of the display apparatus 400 and the displayed colour patch should be adjusted to a desired colour level. The colour patch may be displayed in a predetermined area of the screen with a particular colour level, and have a maximum or minimum level of a particular colour. That is, colour calibration is performed through a colour patch having colours whose RGB levels are 0 or 255 based on 256 colours.

The first colour patch information includes colour level information of a colour patch which is displayed in a screen. The first colour patch information may include a particular level that is input by a user through colour calibration software or a preset value which is output to the colour calibration unit 330 if the colour calibration is performed.

The colour calibration unit 330 may be implemented with additional hardware, that is, a colour management integrated circuit (CMIC) which performs colour calibration as a whole. The colour calibration unit 330 receives a graphic image and first colour patch information from the graphic card unit 320, and generates second colour patch information based on the first colour patch information and stored internal colour patch information. The second colour patch information includes colour level information of a colour patch which is displayed in a screen of the display apparatus 300 like the first colour patch information. The colour calibration unit 330 generates the second colour patch information in an additional layer separately from the graphic image and transmits the second colour patch information to the display apparatus 400 through the first interface unit 310.

The display apparatus 400 displays a colour patch based on the received second colour patch information, and transmits a colour calibration control signal to the colour calibration unit 330 to adjust the colour patch to a target value. The colour calibration unit 330 repeatedly transmits an RGB gain value that has been changed to the same colour level to the display apparatus 400 until the colour patch reaches the target value.

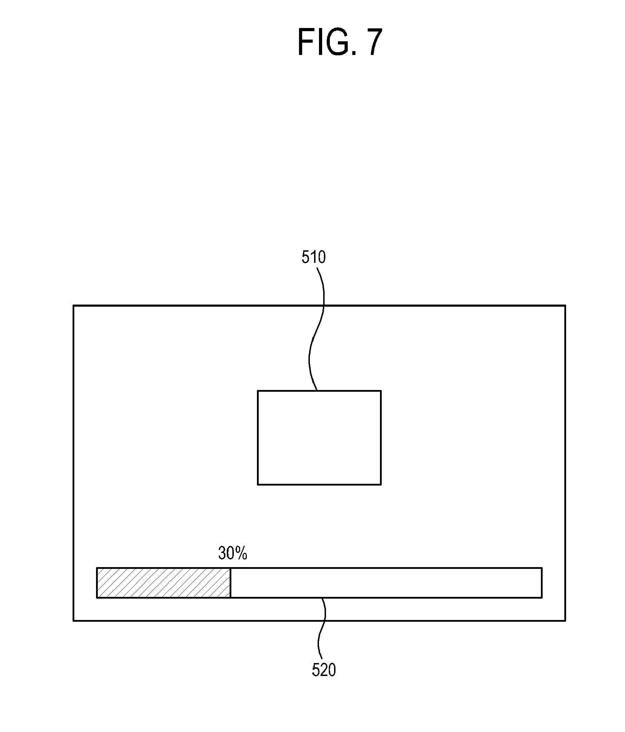

When the colour calibration is performed, the display unit 420 of the display apparatus 400 displays a colour calibration process thereon, and as the colour calibration time takes at least 30 seconds, which is not short, a colour calibration process window 520 is displayed to show the colour calibration rate as in FIG. 7. In a conventional display apparatus, a colour patch is displayed based on the colour patch information generated by the graphic card (510), and a colour calibration control signal is transmitted corresponding to the detection value of the colour patch to thereby adjust the colour patch by the graphic card. As a result, there arises a problem that the colour of the remaining area including the calibration process window 520 as well as the colour patch display area is changed. However, in the present exemplary embodiment, the colour patch and the graphic image including the calibration process window are generated in separate layers, and only the colour patch area 510 of the displayed image is adjusted by the colour calibration unit 330 and thus the colour calibration may be performed by maintaining the original colour of the graphic image including the calibration process window 520.

The detection unit 430 of the display apparatus 400 which will be described later detects a change in the colour patch area displayed on the display unit 420. In a conventional display apparatus 400, a detection area 610 of the detection unit 430 may not be equal to a colour patch display area 620 as a result of a scaling when an image to which the colour calibration is performed is displayed. For example, if a resolution of an image generated by the graphic card is 1024*768 and a resolution of the display panel is 1920*1200, the scaler of the display apparatus 400 scales the 1024*768 image to 1920*1200 to adjust the resolution of the image to the resolution of the display panel. As above, there may arise a case that the detection area 610 of the detection unit 430 may not be equal to the colour patch display area 620 due to a difference in resolutions. Thus, colour calibration may not be performed precisely. The colour calibration system according to the present exemplary embodiment generates a colour patch in a separate layer and transmits the colour patch which is then displayed in a particular area of the display panel. Thus, the colour patch is displayed in a target area of a screen of the display apparatus 420 and colour calibration may be performed.

The first control unit 340 executes colour calibration software and controls the entire operation of the image processing apparatus 300 when the colour calibration is performed. The first control unit 340 may be implemented with a microprocessor such as a central processing unit (CPU).

In the present exemplary embodiment, the first colour patch information and the internal colour patch information include colour level information of a particular colour, which may be a value input by a user through the executed colour calibration software and is generally input to display a maximum level of the particular colour. For example, if a user inputs a full red, that is, a colour patch in which RGB values are (255,0,0) in 256 colours to perform colour calibration, the first control unit 340 transmits the value to the graphic card unit 320 and the colour calibration unit 330 to generate the first colour patch information and the internal colour patch information, respectively. If the first colour patch information is provided by the graphic card unit 320, the colour calibration unit 330 checks whether the first colour patch information is equal to the stored internal colour patch information. Normally, the first colour patch information is equal to the internal colour patch information since they are generated on the basis of the value input by a user. However, due to an error of the graphic card or malfunction of a connection cable to the colour calibration unit 330, the two information may not be equal, in which case colour calibration is not performed precisely.

To prevent the foregoing problem, if the first colour patch information is not equal to the internal colour patch information, the first control unit 340 may generate and transmit a predetermined warning screen to the display apparatus 400 and the display apparatus 400 may display the warning screen for a user to be informed. Alternatively, the first control unit 340 may control the colour calibration unit 330 to generate the second colour patch information that has a same colour level as the first colour patch information does.

The first control unit 340 may control the colour calibration unit 330 to generate the second colour patch information based on the interface type of the first interface unit 310 of the image processing apparatus 300 and the second interface unit 410 of the display apparatus 400. As described above, various interfaces such as DVI, Component, HDMI and SDI may be used, and depending on the type of the used interface, a range of transmissible output level may change. For example, if an SDI is connected to an external input source, the range of the transmitted output level may be limited to 16 to 235. Even if the second colour patch information with (255, 0,0) is output by the colour calibration unit 330, the information cannot but be transmitted as (235, 16,16) which is the maximum output level of the SDI. In this case, colour calibration may not be performed precisely, and thus the first control unit 340 may generate and transmit the second colour patch information with (235, 16, 16) to the display apparatus 400 based on the interface type. The information on the connected interface type may be recognized by a user's input through colour calibration software.

As shown in FIG. 6, the display apparatus 400 includes a second interface 410, a display unit 420, a detection unit 430 and a second control unit 440.

The second interface unit 410 exchange data with the first interface unit 310 of the image processing apparatus 300 according to a predetermined interface standard.

The display unit 420 displays various images thereon, and displays a colour patch which is generated on the basis of a graphic image transmitted by the image processing apparatus 300 and colour patch information when colour calibration is performed.

The detection unit 430 detects a colour of a colour patch displayed on the display unit 420. The purpose of colour calibration is to calibrate a colour displayed on the display unit 420 into a target value with respect to an input particular colour level. A user may view the colour and adjusts the colour patch, and the detection unit 430 as additional hardware may detect the colour of the colour patch displayed, as in the exemplary embodiment.

The second control unit 440 may be implemented with a CPU which controls entire operation of the display apparatus 400. To perform colour calibration, the second control unit 440 generates a colour patch based on the received second colour patch information and controls the display unit 420 to display the colour patch together with a received graphic image thereon. If the colour patch is displayed on the display unit 420, the detection unit 430 detects the displayed colour patch, and the second control unit 440 checks whether the target colour is equal to the displayed colour of the colour patch. To compensate for a difference between the two colours, the second control unit 440 transmits a colour calibration control signal to the image processing apparatus 300. As described above, the image processing apparatus 300 transmits an RGB gain value that has been changed on the basis of the received colour calibration control signal to the display apparatus 400. Accordingly, the displayed colour patch is changed, and the foregoing process is repeated until the colour patch reaches the target colour.

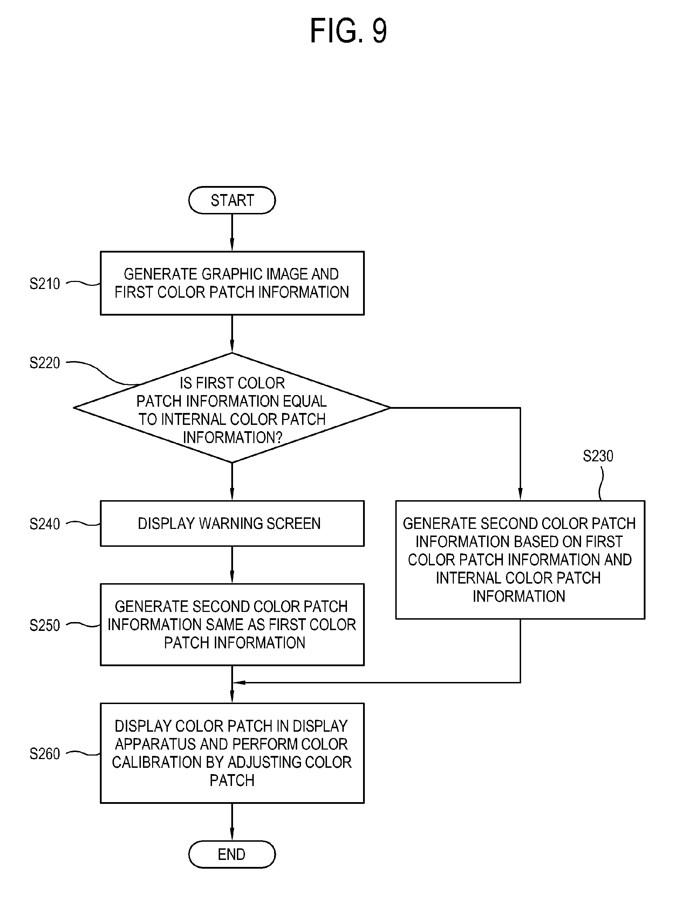

FIG. 9 is a control flowchart of a colour calibration method according to the second exemplary embodiment.

The colour calibration method is performed by the image processing apparatus 300 and the display apparatus 400. The image processing apparatus 300 may be implemented with a PC and the display apparatus 400 may be implemented with a TV or a monitor.

If colour calibration is performed, the image processing apparatus 300 generates the graphic image and the first colour patch information (S210). The graphic image and the first colour patch information are generated by the graphic card of the image processing apparatus 300, and are transmitted to the colour calibration unit which is implemented with a CM IC. To perform colour calibration, a colour patch in a particular colour should be displayed in a screen of the display apparatus 400 and the displayed colour patch should be calibrated to the desired colour level. The colour patch information includes colour level information of a particular colour, and may be a value input by a user through colour calibration software.

The colour calibration unit 330 generates the second colour patch information to display a colour patch in the display apparatus 400 in an additional layer separately from the graphic image, on the basis of the received first colour patch information and the stored internal colour patch information, and transmits the second colour patch information to the display apparatus 400 (S230).

The display apparatus 400 displays the colour patch based on the received second colour patch information and performs colour calibration by adjusting the displayed colour patch (S240). If the colour patch is displayed in the display apparatus 400, the colour of the displayed colour patch is detected and the colour calibration control signal is transmitted to the image processing apparatus 300 to compensate for the difference between the detected colour and the target value. The image processing apparatus 300 transmits to the display apparatus 400 the RGB gain value that has been changed on the basis of the received colour calibration control signal, and thus the displayed colour patch is changed and this process is repeated until the colour patch reaches the target value. As a result, colour calibration is completed.

According to the foregoing exemplary embodiment, the additional colour calibration unit is used other than the graphic card and the colour patch image is generated in an additional layer separately from the graphic image. As a result, the colour of the graphic image including the calibration process window is maintained, and only the colour of the colour patch is changed to thereby perform colour calibration. Also, the problem that the detection area of the detection unit of the display apparatus is not equal to the colour patch display area due to the scaling may be solved.

The colour calibration method according to the present exemplary embodiment may further include an operation of checking whether the first colour patch information is equal to the internal colour patch information (S220). Normally, the first colour patch information is equal to the internal colour patch information since they are generated on the basis of the value input by a user. However, due to an error of the graphic card or malfunction of a connection cable to the colour calibration unit 330, the two information may not be equal, in which case colour calibration is not performed precisely. Accordingly, if the first colour patch information is not equal to the internal colour patch information, a predetermined warning screen may be generated and displayed in the display apparatus 400 (S240). Otherwise, the second colour patch information which has the same colour level as the first colour patch information does is generated and the colour patch may be displayed and the colour calibration may be performed based on the second colour patch information (S250).

The image processing apparatus 300 and the display apparatus 400 may be connected to each other through various interfaces. The second colour patch information may be generated on the basis of the interface type of the image processing apparatus 300 and the display apparatus 400. The information on the connected interface type may be recognized by a user's input through colour calibration software.

Although a few exemplary embodiments have been shown and described, it will be appreciated by those skilled in the art that changes may be made in these exemplary embodiments without departing from the principles of the inventive concept, the scope of which is defined in the appended claims and their equivalents. Therefore, it is to be understood that the disclosed embodiments are only examples without any limitation in all aspects.

## Claims

1. An image processing apparatus comprising:
an interface unit which communicates with an external display apparatus;
a graphic card unit which outputs a graphic image which will be displayed in the display apparatus and first colour patch information for colour calibration of the display apparatus;
a colour calibration unit which receives the output graphic image and first colour patch information from the graphic card unit, generates second colour patch information based on the first colour patch information and stored internal colour patch information, and transmits the graphic image and the second colour patch information to the display apparatus through the interface unit; and
a control unit which controls the colour calibration unit to perform colour calibration process by adjusting a colour patch displayed in the display apparatus.

2. The image processing apparatus according to claim 1, wherein the first colour patch information and the internal colour patch information comprise colour level information of a particular colour input by a user.

3. The image processing apparatus according to any one of the preceding claims, wherein the control unit generates and transmits a predetermined warning screen to the display apparatus if the first colour patch information is not equal to the internal colour patch information.

4. The image processing apparatus according to any one of the preceding claims, wherein the control unit controls the colour calibration unit to generate second colour patch information having a same colour level as the first colour patch information if the first colour patch information is not equal to the internal colour patch information.

5. The image processing apparatus according to any one of the preceding claims, wherein the display apparatus generates and displays the colour patch in an additional layer separately from the graphic image based on the second colour patch information, and the colour calibration unit performs colour calibration by adjusting the colour of the colour patch only.

6. The image processing apparatus according to claim 5, wherein the colour patch is displayed in a particular area of a screen of the display apparatus.

7. The image processing apparatus according to any one of the preceding claims, wherein the control unit generates the second colour patch information based on an interface type of the interface unit and an interface of the display apparatus.

8. A colour calibration method comprising:
generating a graphic image which will be displayed in a display apparatus and first colour patch information for colour calibration of the display apparatus;
generating second colour patch information to display a colour patch, based on the first colour patch information and stored internal colour patch information; and
displaying a colour patch in the display apparatus based on the second colour patch information, and performing colour calibration process by adjusting the displayed colour patch.

9. The colour calibration method according to claim 8, wherein the first colour patch information and the internal colour patch information comprise colour level information of a particular colour input by a user.

10. The colour calibration method according to claim 9, further comprising checking whether the first colour patch information is equal to the internal colour patch information.

11. The colour calibration method according to claim 10, further comprising generating and displaying a predetermined warning screen in the display apparatus if the first colour patch information is not equal to the internal colour patch information.

12. The colour calibration method according to claims 10 or 11, further comprising generating second colour patch information that has a same colour level as the first colour patch information does if the first colour patch information is not equal to the internal colour patch information.

13. The colour calibration method according to any one of claims 9 to 12, wherein the internal colour patch information comprises a maximum level or a minimum level of the particular colour.

14. The colour calibration method according to any one of claims 8 to 13, further comprising generating the second colour patch information based on the interface type of the image processing apparatus and the display apparatus.
